Europäisches Patentamt

European Patent Office

Office européen des brevets

(11) Numéro de publication : **0 376 816 B1**

(19)

(12) # FASCICULE DE BREVET EUROPEEN

(45) Date de publication du fascicule du brevet :
**16.12.92 Bulletin 92/51**

(51) Int. Cl.⁵ : **F16D 23/06**

(21) Numéro de dépôt : **89403607.8**

(22) Date de dépôt : **21.12.89**

(54) **Synchroniseur double à moyens de verrouillage axial intégrés.**

(30) Priorité : **30.12.88 FR 8817529**

(43) Date de publication de la demande :
**04.07.90 Bulletin 90/27**

(45) Mention de la délivrance du brevet :
**16.12.92 Bulletin 92/51**

(84) Etats contractants désignés :
**DE GB IT**

(56) Documents cités :
**EP-A- 0 157 908
DE-B- 1 042 978
DE-C- 926 468
GB-A- 2 166 206
US-A- 2 900 059**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Chretien, Philippe**
**32, rue du Professeur Guyon**
**F-78430 Louveciennes (FR)**

(74) Mandataire : **Kohn, Philippe et al**
**c/o CABINET LAVOIX 2, place d'Estienne**
**d'Orves**
**F-75441 Paris Cédex 09 (FR)**

# Description

La présente invention est relative à un synchroniseur double notamment pour une boîte de vitesses de véhicule automobile.

Les synchroniseurs sont de petits embrayages maintenus en prise, au moyen de la commande de changement de vitesse, durant le temps nécessaire pour obtenir l'égalisation des vitesses angulaires des organes à craboter. L'invention concerne la catégorie des synchroniseurs absolus qui ne permettent pas la mise en prise des dents de crabot, tant que la synchronisation rigoureuse des vitesses n'est pas obtenue.

L'invention concerne plus particulièrement un synchroniseur double pour deux pignons montés libres en rotation sur un arbre de part et d'autre d'un moyeu fixé à l'arbre et sur lequel un manchon de commande est monté coulissant axialement pour occuper plusieurs positions axiales définies par des moyens de verrouillage.

On connaît des synchroniseurs de ce type dont les moyens de verrouillage comportent une pluralité de poussoirs radiaux à billes agencés dans un plan médian commun du moyeu et perpendiculaire à l'axe de ce dernier et dont chacune des billes est sollicitée élastiquement pour coopérer avec une piste axiale intérieure crantée du manchon.

Chaque synchroniseur comporte une bague intermédiaire de friction liée en rotation au manchon, déplaçable axialement entre le moyeu et le pignon associé et comportant une portée conique de friction qui coopère avec une portée complémentaire du pignon lorsqu'elle est poussée axialement vers ce dernier par des moyens d'entraînement comportant notamment une rampe d'armement formée dans chacune des pistes correspondantes.

Chaque synchroniseur comporte également des dentures de crabotage formées respectivement sur le pignon et au voisinage de l'extrémité axiale correspondante du manchon et qui coopèrent pour accoupler le pignon au manchon lorsque ce dernier occupe sa position axiale extrême d'engagement correspondante.

Un des problèmes principaux pour la mise au point d'un tel synchroniseur double consiste à assurer un compromis entre des frottements élevés qui sont nécessaires durant la phase de synchronisation proprement dite et des frottements réduits au minimum lorsque le synchroniseur est au point mort ou en position d'engagement.

Pour obtenir un bon compromis il est nécessaire que chacune des pièces soit positionnée axialement de manière très précise lors des différentes phases d'actionnement du manchon d'entraînement en vue du passage d'une vitesse.

Cette phase d'actionnement se décompose de la manière suivante. L'effort appliqué sur le manchon en partant de la position de point mort est transmis à la bague de friction lors de la phase d'armement. La bague de friction tournant avec le manchon est poussée axialement de façon à venir frotter sur la face conique solidaire du pignon à accoupler pour provoquer la synchronisation des vitesses. Lorsque cette dernière est atteinte, le crabotage du moyeu et du pignon est réalisé grâce aux dentures formées dans le manchon.

La conception des synchroniseurs évoqués plus haut, dans laquelle les moyens de verrouillage en position de point mort ont été intégrés au moyeu permettent d'éviter le phénomène de léchage résiduel du synchroniseur en assurant le rappel du manchon en position médiane de point mort sans jeu axial.

Selon une conception permettant d'atteindre ce résultat, les billes des poussoirs sont reçues radialement entre deux rampes en vis à vis qui sont liées respectivement au moyeu fixé à l'arbre et au manchon. La rampe liée au moyeu est par exemple constituée pan un siège conique de la face extrême du poussoir.

On constate toutefois que dans cette conception il n'est pas possible d'intégrer des moyens de verrouillage en position, réalisés sous la forme de poussoirs à billes, qui permettent d'assurer un maintien précis en positions axiales engagées. En effet, les billes agissant toutes alternativement pour assurer l'armement de l'un ou de l'autre des deux synchroniseurs, une telle combinaison conduirait lors du dégagement d'un des rapports à provoquer sur le synchroniseur du rapport opposé un léchage correspondant à son armement. Ce léchage serait nuisible car il génèrerait un couple qui aurait pour effet de plaquer le manchon contre les rampes habituelles, dites "antilâcher", de ses cannelures de crabotage. Il pénaliserait ainsi l'effort de dégagement, de façon analogue à un débrayage incomplet.

Le document GB-R-2.166.206 décrit et représente un synchroniseur du type défini au préambule de la revendication 1.

Dans ce document, chaque poussoir à bille coopère avec une piste axiale intérieure crantée du manchon de commande, et chaque bille entraîne alternativement les deux bagues, par l'intermédiaire d'une plaque. Le jeu axial inévitable de cette plaque avec chaque bague s'ajoute à celui de la bille dans la plaque, ce qui crée un surcroît de course du manchon, donc du levier de commande.

L'invention a pour but de remédier à cet inconvénient en proposant un synchroniseur tel qu'il est défini à la partie caractérisante de la revendication 1.

Selon d'autres caractéristiques de l'invention :
- la butée est une patte radiale dont une face est agencée en vis à vis de la bille ; et
- chacun des poussoirs radiaux comporte un siège conique en creux sur lequel repose la bille, l'angle d'inclinaison du cône du siège par rapport à l'axe du synchroniseur étant inférieur à ceux des rampes d'armement et d'engagement, de manière à assurer le centrage sans jeu du manchon par rapport au moyeu dans sa position axiale médiane de point mort ;

- en position de vitesse engagée, le manchon est maintenu en appui axial contre une partie du pignon correspondant grâce à la coopération des billes qui sont en appui élastique contre les rampes d'engagement.

D'autres caractéristiques et avantages de l'invention apparaîtront à la lecture détaillée qui va suivre pour la compréhension de laquelle on se reportera aux dessins annexés dans lesquels :

- la figure 1 est une vue en coupe axiale d'un synchroniseur double réalisé conformément aux enseignements de l'invention, qui est représenté en position de point mort et dont une des deux positions d'engagement de vitesse est représentée en traits mixtes ;

- la figure 2 est une vue simplifiée en section selon la ligne 2-2 de la figure 1 ;

- les figures 3a, 3b et 3c sont des vues de détail en section selon la ligne 3-3 de la figure 2 qui correspondent respectivement aux positions de point mort, d'armement et d'engagement du synchroniseur avec l'un des deux pignons ; et

- les figures 4a, 4b, et 4c sont des vues similaires à celles des figures 3a, 3b et 3c prises en section selon la ligne 4-4 de la figure 2.

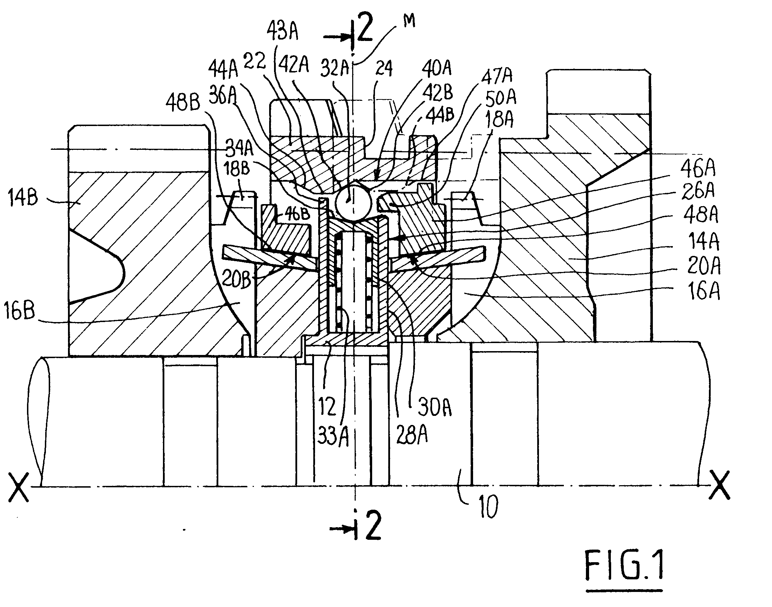

La conception du synchroniseur double représentée à la figure 1 étant globalement symétrique par rapport à son plan médian M, l'ensemble des composants relatif à un premier synchroniseur, à droite en considérant la figure 1, seront repérés par des chiffres de référence indicés A, tandis que les composants de l'autre synchroniseur seront repérés avec les mêmes chiffres de référence indicés avec la lettre B.

On a représenté à la figure 1 un arbre 10 sur lequel est fixé axialement et immobilisé en rotation un moyeu 12. De part et d'autre du moyeu 12 par rapport à son plan médian M sont disposés deux pignons 14A et 14B qui sont immobilisés axialement mais libres en rotation sur l'arbre 10.

Les pignons 14A et 14B sont munis d'un prolongement axial 16A, 16B sur la périphérie desquels sont formées des dentures de crabotage 18A et 18B.

Chacun des pignons 14A et 14B comporte une surface de friction conique 20A, 20B orientée vers l'extérieur par rapport à l'axe de rotation X-X de l'arbre 10.

Le synchroniseur double comporte également un manchon de commande 22 qui est susceptible d'être déplacé axialement par rapport au moyeu 12 sous l'action d'une fourchette de commande (non représentée) qui est reçue dans une rainure de fourchette 24 formée dans la surface cylindrique externe du manchon 22.

Les différentes positions axiales du manchon 22 par rapport au moyeu 12 résultent de la coopération de moyens de verrouillage constitués par des poussoirs à billes 26A et 26B avec le manchon 22.

Chacune des séries de poussoirs à billes 26A et 26B comprend trois poussoirs radiaux qui sont répartis et alternés régulièrement autour de l'axe X-X du moyeu 12.

Le poussoir 26A est constitué d'un alésage 28A qui s'étend radialement dans le moyeu 12 et dans lequel est reçu un piston de poussoir 30A qui sollicite radialement vers l'extérieur une bille de verrouillage 32A au moyen d'un ressort 33A.

La bille 32A repose sur un siège conique creux 34A formé à l'extrémité libre du piston 30A.

Le moyeu 12 comporte également trois pattes de butée 36A qui s'étendent chacune radialement en vis à vis de la bille 32A afin de limiter les déplacements axiaux des billes 32A par rapport au moyeu 12 en direction du pignon 14B.

D'une manière symétrique le moyeu comporte également trois pattes de butée 36B qui s'étendent radialement vers l'extérieur pour empêcher les déplacements axiaux des billes 32B par rapport au moyeu 12 en direction du pignon 14A.

Chacune des billes 32A de la première série de poussoirs radiaux est reçue dans une piste axiale interne 40A formée dans la surface cylindrique interne du manchon 22. De la même manière chacune des billes 32B est reçue dans une piste axiale 40B.

La piste 40A comprend un cran d'armement constitué par une rampe d'armement 42A qui s'étend depuis le plan médian M en direction de l'axe X-X et qui se prolonge, vers la gauche en considérant la figure 1 , par un méplat 43A et par une rampe d'engagement 44A. La piste 40A comprend également une portion plane rectiligne 47A qui s'étend depuis le plan médian M, vers la droite en considérant la figure 1, en direction du pignon 14A à l'opposé du cran d'armement.

D'une manière symétrique par rapport au plan M chaque piste 40B comprend un cran d'armement délimité par une rampe d'armement 42B et une rampe d'engagement 44B reliées entre elles par un méplat 43B.

Chaque synchroniseur comporte également une bague intermédiaire de friction 46A, 46B qui est disposée axialement entre le pignon associé et le moyeu 12 de façon que sa surface conique interne de friction 48A, 48B soit susceptible de coopérer avec la surface conique externe en vis à vis 20A, 20B.

Les moyens d'actionnement de chacune des bagues de friction 46A, 46B par poussée axiale du manchon 22 sont constitués par les billes 32A, 32B qui coopèrent avec des pattes, ou talons, axiales 50A, 50B venus de matière avec la bague de friction et dont la face libre d'extrémité est en vis à vis de la bille 32A, 32B et de la patte radiale de butée 36A, 36B. Les bagues intermédiaires de friction 46A, 46B sont bien entendu liées en rotation avec le manchon 22, ce dernier étant libre de coulisser axialement par rapport à celles-ci.

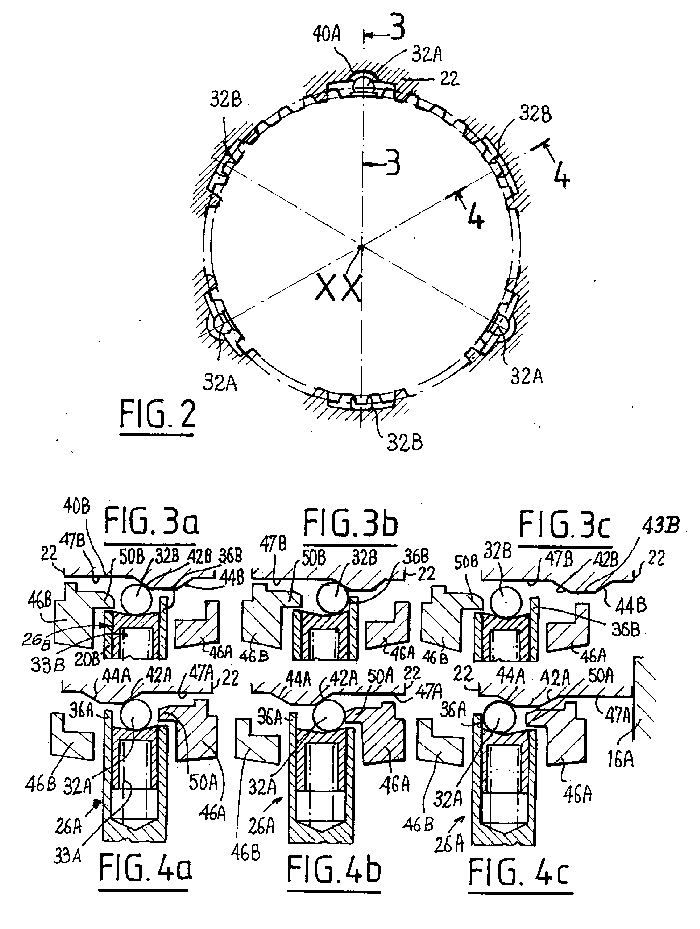

On décrira maintenant le fonctionnement du synchroniseur double en se reportant notamment aux séries de figures 3 et 4.

Lorsque le synchroniseur double est dans sa position de point mort illustrée aux figures 1, 3a et 4a, les billes 32A et 32B de chacune des séries de poussoirs radiaux 26A et 26B sont respectivement en appui contre les rampes d'armement 42A et 42B formées dans les pistes 40A et 40B.

Sous l'action des ressorts de poussoirs 33A et 33B, les deux séries de billes 32A et 32B assurent ainsi en coopération et sans jeu axial le maintien du manchon 22 en position médiane de point mort du fait du choix des angles des sièges coniques 34A, 34B et des rampes d'armement 42A et 42B.

On décrira maintenant l'ensemble des opérations visant à aboutir à la synchronisation et à l'engagement avec le pignon 14A.

Si à l'aide de la fourchette de commande on exerce un effort axial de poussée, vers la droite en considérant les figures, sur le manchon 22, les rampes d'armement 42A poussent les billes 32A axialement vers la droite jusqu'à ce qu'elles viennent en contact avec les pattes axiales de liaison 50A de la bague intermédiaire de friction 46A. Cette mise en contact a pour effet d'amener également en contact les surfaces de friction 20A et 48A et donc de provoquer l'entraînement en rotation par friction du pignon 14A.

Lorsque la vitesse de synchronisation est atteinte la poursuite de l'effort de poussée axiale sur le manchon 22 a pour effet de provoquer l'effacement radial vers l'intérieur des billes 32A, à l'encontre des efforts exercés par les ressorts 33A, pour permettre le crabotage du pignon 14A et son entraînement en rotation par l'arbre 10.

On atteint ainsi la position axiale extrême vers la droite du manchon 22 représentée aux figures 3c et 4c dans lesquelles les billes 32A sont en appui élastique contre les rampes d'engagement 44A des pistes 40A, ce qui maintient le manchon en appui axial contre le prolongement 16A du pignon.

On constate que lors de l'ensemble des mouvements de déplacements axiaux vers la droite du manchon 22, les billes 32B de l'autre série de poussoirs axiaux 26B n'ont pas été entraînées axialement vers la droite du fait de l'existence des pattes radiales de butée 36B et des portions planes rectilignes 47B des pistes axiales 40B.

L'ensemble des opérations qui viennent d'être décrites s'applique symétriquement en vue de permettre la synchronisation et l'engagement avec le pignon opposé 14B.

On comprend également aisément que le retour du manchon 22 vers sa position médiane de point mort s'effectue, après le passage d'un point dur dû à la coopération des billes 32A avec les rampes 44A, sans provoquer aucune action néfaste sur le synchroniseur opposé grâce à l'arrêt axial des billes 32A contre leurs butées 36A et grâce à l'écartement existant entre les billes 32B et leur rampe d'armement 42B.

## Revendications

1. Synchroniseur double pour deux pignons (14A, 14B) montés libres en rotation sur un arbre (10) de part et d'autre d'un moyeu (12) fixé à l'arbre et sur lequel un manchon de commande (22) est monté coulissant axialement pour occuper plusieurs positions axiales définies par des moyens de verrouillage (26A, 26B, 40A, 40B) comportant une pluralité de poussoirs radiaux (26A, 26B) à billes (32A, 32B) agencés dans un plan (M) médian, commun perpendiculaire à l'axe (X-X) du moyeu (12) et dont chacune des billes (32A, 32B) est sollicitée élastiquement vers l'extérieur pour coopérer avec une piste axiale intérieure crantée (40A, 40B) du manchon, chaque synchroniseur comportant une bague intermédiaire de friction (46A, 46B) liée en rotation au manchon (22), déplaçable axialement entre le moyeu (12) et le pignon, associé (14A, 14B) et comportant une portée conique (48A, 48B) de friction qui coopère avec une portée complémentaire (20A, 20B) du pignon lorsqu'elle est poussée axialement vers ce dernier par des moyens d'entraînement comportant une rampe d'armement (42A, 42B) formée dans chacune des pistes correspondantes (40A, 40B) et une pièce de liaison (50A, 50B) qui assure la transmission de l'effort de poussée exercé par le manchon sur chaque bille à la bague de friction (46A, 46B) qui coopère avec le pignon associé (14A, 14B), chaque synchroniseur comportant également des dentures de crabotage (18A, 18B) formées respectivement sur le pignon et au voisinage de l'extrémité axiale correspondante du manchon (22) et qui coopèrent pour accoupler le pignon associé (14A, 14B) au manchon (22) lorsque ce dernier occupe sa position axiale extrême d'engagement correspondante, caractérisé en ce que les poussoirs comprennent deux séries de poussoirs (26A, 26B) répartis alternativement et régulièrement autour de l'axe X-X du moyeu (12), chacune des deux séries étant associée au synchroniseur de l'un des deux pignons, chaque bille d'une série coopérant d'une part avec une butée (36A, 36B) solidaire du moyeu (12) qui s'oppose à tout déplacement axial de la bille (32A, 32B) du côté opposé au pignon associé (14A, 14B), et d'autre part, avec une (40A, 40B) desdites pistes axiales qui comporte une portion plane (47A, 47B) s'étendant depuis le plan médian du manchon (22) en direction du pignon associé (14A, 14B) et délimité axialement en direction de l'autre pignon (14B, 14A) par un cran d'armement comprenant une rampe d'armement (42A, 42B) inclinée en direction de l'axe et une rampe inverse d'engagement (44A, 44B) qui coopère avec la bille (32A, 32B) pour immobiliser axialement le manchon (22) dans la position d'engagement correspondant au crabotage du pignon associé (14A, 14B), et en ce que la pièce de liaison est une patte axiale (50A, 50B) solidaire de la bague de friction associée dont l'extrémité libre coopère avec la bille (32A, 32B) en vis à vis.

2. Synchroniseur selon la revendication 1, caractérisé en ce que ladite butée est une patte radiale (36A, 36B) dont une face est agencée en vis à vis de la bille (32A, 32B).

3. Synchroniseur selon l'une quelconque des revendications précédentes, caractérisé en ce que chacun des poussoirs radiaux comporte un siège (34A, 34B) conique en creux sur lequel repose la bille, l'inclinaison du cône du siège par rapport à l'axe du synchroniseur étant inférieure à celle des rampes d'armement et d'engagement, de manière à assurer le centrage sans jeu du manchon (22) par rapport au moyeu (12) dans une position axiale médiane de point mort.

4. Synchroniseur selon l'une quelconque des revendications précédentes, caractérisé en ce que, en position de vitesse engagée, le manchon (22) est maintenu en appui axial contre une partie (16A, 16B) du pignon correspondant grâce à la coopération des billes (32A, 32B) qui sont en appui élastique contre les rampes d'engagement (44A, 44B).

**Patentansprüche**

1. Doppelsynchronisiervorrichtung für zwei Ritzel (14A, 14B), die frei drehend auf einer Welle (10) auf beiden Seiten einer an der Welle befestigten Nabe (12) montiert sind und auf der ein Ausrücker (22) axial gleitend montiert ist, um verschiedene axiale Stellungen einnehmen zu können, die durch Verriegelungsmittel (26A, 26B, 40A, 40B) definiert sind, die eine Vielzahl von radialen mit Kugeln (32A, 32B) bestückten Druckkörpern (26A, 26B) aufweisen, die in einer gemeinsamen rechtwinklig zur Achse (X-X) der Nabe (12) verlaufenden mittleren Ebene M vorgesehen sind, wobei jede der Kugeln (32A, 32B) elastisch nach außen beansprucht wird, um mit einer verzahnten axialen inneren Lauffläche (40A, 40B) des Ausrückers zusammenzuwirken, und in der jeder der beiden Synchronkörper einen zwischengeschalteten Führungsring (46A, 46B) aufweist, der in Drehbewegung mit dem Ausrücker (22) verbunden und zwischen der Nabe (12) und dem zugeordneten Ritzel (14A, 14B) axial verschiebbar ist, sowie eine konische Führungsfläche (48A, 48B), die mit einer komplementären Fläche (20A, 20B) des Ritzels zusammenwirkt, wenn sie axial gegen dieses mit Hilfe von Antriebsmitteln geschoben wird, die eine Anzugsrampe (42A, 42B) aufweisen, die in jeder der entsprechenden Laufflächen (40A, 40B) ausgebildet ist, sowie ein Verbindungsstück (50A, 50B) für die Übertragung der Druckkraft, die von dem Ausrücker auf jede einzelne Kugel an dem Führungsring (46A, 46B) ausgeübt wird, welcher mit dem zugeordneten Ritzel (14A, 14B) zusammenwirkt, wobei jeder Synchronkörper ebenfalls Keilnutenverzahnungen (18A, 18B) aufweist, die jeweils an dem Ritzel und an der entsprechenden äußersten axialen Ende des Ausrückers (22) ausgebildet sind und die zusammenwirken, um das zugeordnete Ritzel (14A, 14B) mit dem Ausrücker (22) zu koppeln, wenn letzterer seine entsprechende äußerste axiale Eingriffsstellung einnimmt,
**dadurch gekennzeichnet, daß**
die Druckkörper zwei Reihen von Druckkörpern (26A, 26B) aufweisen, die abwechselnd und gleichmäßig um die Achse (X-X) der Nabe (12) verteilt sind, wobei jeweils eine der beiden Reihen dem Synchronkörper eines der beiden Ritzel zugeordnet ist und jede Kugel einer Reihe einerseits mit einem Widerlager (36A, 36B) zusammenwirkt, das an der Nabe (12) befestigt ist und eine axiale Verschiebung der Kugel (32A, 32B) auf der gegenüberliegenden Seite des zugeordneten Ritzels (14A, 14B) verhindert, und andererseits mit einer der axialen Laufflächen (40A, 40B), die einen ebenen Teil (47A, 47B) aufweist, der sich von der Mittelebene des Ausrückers (22) in Richtung des zugeordneten Ritzels (14A, 14B) erstreckt und axial in Richtung des anderen Ritzels (14B, 14A) durch eine Rastkerbung begrenzt wird, die eine in Richtung der Achse geneigte Anzugsrampe (42A, 42B) aufweist, sowie eine umgekehrte Eingriffsrampe (44A, 44B), die mit der Kugel (32A, 32B) zusammenwirkt, um den Ausrücker (22) axial in der Eingriffsstellung zu verriegeln, die dem Formschluß des zugeordneten Ritzels (14A, 14B) entspricht, und dadurch, daß das Verbindungsteil eine axiale Lasche (50A, 50B) ist, die fest mit dem zugeordneten Führungsring verbunden ist, dessen freies Ende mit der gegenüberliegenden Kugel (32A, 32B) zusammenwirkt.

2. Eine Synchronisiervorrichtung nach Anspruch 1, **dadurch gekennzeichnet, daß**

das Widerlager eine radiale Lasche (36A, 36B) ist, deren eine Fläche gegenüber der Kugel (32A, 32B) angeordnet ist.

3. Eine Synchronisiervorrichtung nach einem der vorangegangenen Ansprüche, **dadurch gekennzeichnet, daß** jeder der radialen Druckkörper einen hohlen konischen Sitz (34A, 34B) aufweist, in dem die Kugel aufgenommen ist, wobei die Neigung des Konus des Sitzes zur Achse des Synchronkörpers kleiner ist, als diejenige der Anzugs- und Eingriffsrampen, um so eine spielfreie Zentrierung des Ausrückers (22) gegenüber der Nabe (12) in einer mittleren axialen Leerlaufstellung zu gewährleisten.

4. Eine Synchronisiervorrichtung nach einem der vorangegangenen Ansprüche, **dadurch gekennzeichnet, daß** bei eingeschaltetem Gang aufgrund des Zusammenwirkens der Kugeln (32A, 32B), die elastisch an den Eingriffsrampen (44A, 44B) anliegen, der Ausrücker (22) in axialer Stellung an einem Teil (16A, 16B) des zugeordneten Ritzels anliegend gehalten wird.

## Claims

1.  A double synchroniser for two pinions (14A, 14B) freely rotatingly mounted on a shaft (10) on either side of a hub (12) fixed to the shaft and on which a control sleeve (22) is axially slideably mounted for the purpose of occupying a plurality of axial positions defined by locking means (26A, 26B, 40A, 40B) comprising a plurality of radial push means (26A, 26B) having balls (32A, 32B) and arranged in a common median plane (M) perpendicular to the axis (X-X) of the hub (12), each of the balls (32A, 32B) of the push means being elastically outwardly biased in order to co-operate with an inner axial notched track (40A, 40B) on the sleeve, each synchroniser comprising an intermediate friction ring (46A, 46B) connected to rotate with the sleeve (22) and axially displaceable between the hub (12) and the associated gear pinion (14A, 14B) and comprising a conical friction surface (48A, 48B) which cooperates with a complementary surface (20A, 20B) on the gear pinion when it is axially urged towards the latter by driving means comprising an arming ramp (42A, 42B) formed in each of the corresponding tracks (40A, 40B) and a connecting member (50A, 50B) which transmits the thrust exerted by the sleeve on each ball at the friction ring (46A, 46B) which co-operates with the associated gear pinion (14A, 14B), each synchroniser further comprising dog clutch teeth (18A, 18B) which are formed respectively on the pinion and in the vicinity of the corresponding axial end of the sleeve (22) and which co-operates in order to couple the associated pinion (14A, 14B) with the sleeve (22) when this latter is occupying its extreme axial position of engagement, characterised in that the push means comprise two series of push means (26A, 26B) alternately and regularly spaced around the axis (X-X) of the hub (12), each of the two series being associated with the synchroniser of one of the two pinions, each ball in a series co-operating on the one hand with an abutment (36A, 36B) on the hub (12) which opposes any axial displacement of the ball (32A, 32B) in the direction away from the associated pinion (14A, 14B) and on the other with one (40A, 40B) of the said axial tracks which includes a planar portion (47A, 47B) extending from the median plane of the sleeve (22) in the direction towards the associated gear pinion (14A, 14B) and is axially defined in the direction towards the other pinion (14B, 14A) by an arming notch comprising an arming ramp (42A, 42B) inclined in the direction towards the axis and an inverse engagement ramp (44A, 44B) which co-operates with the ball (32A, 32B) for axially immobilising the sleeve (22) in the engagement position corresponding to the coupling of the associated gear pinion (14A, 14B) and in that the said connecting means is an axial lug (50A, 50B) which is rigid with the associated friction ring, the free end of which cooperates with the confronting ball (32A, 32B).

2. A synchroniser according to claim 1, characterised in that the said abutment is a radial lug (36A, 36B) one face of which is in a confronting relationship with the ball (32A, 32B).

3. A synchroniser according to any one of the preceding claims, characterised in that each of the radial push means comprises a hollow conical seat (34A, 34B) on which the ball rests, the inclination of the cone of the seat relative to the axis of the synchroniser being less than that of the arming and engaging ramps so as to ensure centring of the sleeve (22) without play in a median neutral axial position in relation to the hub (12).

4. A synchroniser according to any one of the preceding claims, characterised in that in the position of engagement of a gear, the sleeve (22) is maintained in axial bearing relationship against a portion (16A, 16B) of the corresponding gear pinion due to the co-operation of the balls (32A, 32B) which are elastically bearing against the said engagement ramps (44A, 44B).

FIG.1

FIG. 2

FIG. 3a    FIG. 3b    FIG. 3c

FIG. 4a    FIG. 4b    FIG. 4c